# EUROPÄISCHE PATENTANMELDUNG

(11) **EP 0 682 032 A2**
(43) Veröffentlichungstag der Anmeldung: **15.11.1995**
(21) Anmeldenummer: 95103282.0
(22) Anmeldetag: 08.03.1995
(51) Int. Cl.: C07F 7/16

(54) **Verfahren zur Aufarbeitung von kupferhaltigen Rückständen aus der Organochlorsilansynthese**

(30) Priorität: 11.05.1994 DE 4416608
(71) Anmelder: HÜLS AKTIENGESELLSCHAFT, D-45764 Marl (DE)
(72) Erfinder: Ruff, Klaus, D-53840 Troisdorf (DE)

(57) **Zusammenfassung**

Die Erfindung betrifft ein Verfahren zur Aufarbeitung von kupferhaltigen Rückständen aus der Organochlorsilansynthese durch Hydrolysieren der Rückstände und Behandeln derselben mit Salzsäure in Gegenwart von Sauerstoff sowie Abtrennen der kupferhaltigen Salzsäure von den behandelten Rückständen, wobei die kupferhaltige Salzsäure entkupfert und anschließend zum Hydrolysieren von kupferhaltigen Rückständen und zum Behandeln derselben in Gegenwart von Luft wieder eingesetzt wird.

## Beschreibung

Die Erfindung betrifft ein Verfahren zur Aufarbeitung von kupferhaltigen Rückständen aus der Organochlorsilansynthese durch Hydrolysieren der Rückstände und Behandeln derselben mit Salzsäure in Gegenwart von Sauerstoff sowie Abtrennen der kupferhaltigen Salzsäure von den behandelten Rückständen.

Aus dem breitgefächerten Produktspektrum der Organochlorsilane steilen den größten Anteil die Methylchlorsilane, die heute üblicherweise mit Kupfer als Katalysator auf direktem Wege aus metallischem Silicium und Chlormethan synthetisiert werden. Bei dieser sogenannten Direktsynthese entstehen neben dem Hauptprodukt Dimethyldichlorsilan noch weitere Methylchlorsilane sowie höhersiedende Methylchlordisilane und Disilalkene. Die Direktsynthese wird in kontinuierlich betriebenen Wirbelschichtreaktoren durchgeführt, die als Feststoffe neben dem staubförmigen, metallischen Silicium Kupfer als Katalysator sowie Zink und ggf. in geringen Mengen weitere dem Fachmann bekannte Metalle als Promotoren enthalten. Mit dem gasförmigen Produktstrom, der auch nicht umgesetztes Chlormethan enthält, werden staubförmige Feststoffe, wie z. B. umgesetzte Kontaktmasse, Katalysator und Feinstaubteile des Siliciums, aus dem Reaktor ausgetragen. Dieser Staub kann trocken, z. B. durch Zyklone, oder feucht, z. B. durch Wäscher, aus dem Produktstrom abgetrennt werden. Bei einer Naßabscheidung wird üblicherweise der Wäscher mit aus dem Prozeß stammenden Hochsiedern betrieben. Der ausgetragene Feststoff enthält etwa 6 bis 10 Gew.-% Kupfer und 0,05 bis 0,15 Gew.-% Zink.

Aus Selektivitätsgründen muß ein Teil des ausgetragenen Feststoffs aus dem Prozeß entfernt werden. Gemäß der Lehre der DE-OS 31 46 206 sind insbesondere die feinsten Partikel mit dem geringsten Gehalt an Silicium auszuschleusen. Da der auszuschleusende Feststoff im Prozeß nicht weiter verwendet werden kann, muß er entsorgt werden.

Es ist üblich, den Feststoff zunächst in eine wäßrige Phase einzubringen, um die anhaftenden Organochlorsilane durch Hydrolyse in einen festen Hydrolyserückstand und in Chlorwasserstoff, der sich im Hydrolysewasser als Salzsäure löst, umzusetzen. Der so behandelte Rückstand kann aber in dieser Form nicht deponiert werden, da er zum einen eluierbares Kupfer enthält, das die Grundwasserqualität beeinträchtigen kann, zum anderen steht einer Deponierung die Forderung des Gesetzgebers nach Verwertung gemäß Abfallgesetz und Bundes-Immissionsschutzgesetz entgegen.

Die mengenmäßig größten Anteile der festen Rückstände sind Silicium und Kupfer. Wenn man diese Komponenten weitgehend voneinander trennt, ergeben sich größere Verwertungsmöglichkeiten. Außerdem ist ein entkupferter Rückstand leichter deponierbar.

Es ist bekannt, metallisches Kupfer durch Salzsäure in Anwesenheit von Sauerstoff zu lösen (siehe Hollemann-Wiberg: Lehrbuch der Anorganischen Chemie, 71. bis 80. Aufl., Berlin 1970, Seite 710).

Das Lösen des Kupfers kann wirtschaftlich mit Salzsäure aus der Hydrolysestufe erfolgen, sofern deren HCl-Gehalt nicht zu niedrig ist. Höhere Temperaturen und eine überstöchiometrische Sauerstoffmenge begünstigen naturgemäß das Herauslösen von Kupfer aus den vorliegenden Rückständen.

Der kupferhaltige Rückstand sowie der sich bei der Hydrolyse bildende Hydrolyserückstand können zum Herauslösen des Kupfers gemeinsam in Suspension (Hydrolysesuspension) verbleiben.

Durch die Hydrolyse der an den festen Rückständen anhaftenden Organochlorsilane erhält man in der Hydrolysestufe einerseits die zum Lösen des Kupfers erwünschte Salzsäure, andererseits entsteht ein fester Hydrolyserückstand aus den Organochlorsilanen, der beim Herauslösen des Kupfers aus den Rückständen mit zugegen ist. Aus 1 kg höhersiedender Organochlorsilane entstehen bei der Hydrolyse etwa 0,5 kg HCl und 0,5 kg Hydrolyserückstand. Je mehr Hydrolyserückstand beim Herauslösen des Kupfers zugegen ist, um so aufwendiger gestaltet sich aufgrund der erforderlichen höheren Temperaturen und des erforderlichen größeren O₂-Überschusses das Herauslösen des Kupfers. Außerdem bildet sich beim Herauslösen des Kupfers aus dem Hydrolyserückstand und proportional zu diesem Wasserstoff.

Deshalb können zur Vermeidung der Bildung von Knallgasgemischen Sicherheitsmaßnahmen erforderlich sein. Des weiteren ist der Hydrolyserückstand selbst wegen seiner hohen Restfeuchte von etwa 65 bis 70 Gew.-% sehr voluminös, so daß nach gemeinsamer mechanischer Abtrennung des Hydrolyserückstandes mit dem entkupferten Rückstand aus der Suspension der erhaltene feuchte Filterkuchen noch viel Flüssigkeit enthält, die eine Entsorgung verteuert. Schließlich lassen sich aus den zur Hydrolyse gelangenden höhersiedenden Organochlorsilanen alternativ durch katalytische Spaltung, insbesondere der Disilane, noch Wertprodukte, insbesondere Dimethyldichlorsilan, gewinnen, so daß durch die Hydrolyse ein Wertverlust eintritt. Demnach ist also beim Herauslösen des Kupfers aus dem Rückstand ein möglichst geringer Anteil an anhaftenden, zu hydrolysierenden Organochlorsilanen anzustreben.

Aus der EP-PS 0 210 418 ist ein Aufarbeitungsverfahren bekannt, bei dem der auszuschleusende, feste, kupferhaltige Rückstand aus einer Naßwäsche stammt und als etwa 50 %ige Suspension hydrolysiert wird, wobei eine Salzsäure mit einem HCl-Gehalt von 54,5 g/l entsteht. Anschließend wird das Herauslösen des Kupfers bei 6 bar und 70 bis 80 °C in einem Autoklaven 4 h lang durchgeführt, wobei 90 l O₂ pro kg kupferhaltigen Rückstand eingeleitet werden. Die Feststoffe werden abfiltriert, der Feststoffgehalt des feuchten Filterkuchens beträgt etwa 50 Gew.-% und der Kupfergehalt 0,3 bis 0,5 Gew.-%. Das kupferhaltige Filtrat 1 wird, gegebenenfalls unter Zusatz von Reduktionsmitteln, mit Erdalkali- und/oder Alkalihydroxid versetzt, und die ausgefällten Hydroxide bzw. Oxide werden abgetrennt. Im Ausführungsbeispiel wird das Filtrat 1 mit NaOH auf pH 6 eingestellt und SO₂ eingeleitet. Im Anschluß an die Fällung wird filtriert und das Kupfer als Kupfer(I)oxid zusammen mit den mitgefällten Oxiden und Hydroxiden von Eisen, Zink, Aluminium und Silicium erhalten, wobei die Menge der kupferfreien Verbindungen 1 bis 5 Gew.-% beträgt. Das Filtrat 2 enthält gemäß Ausführungsbeispiel noch etwa 50 mg Schwermetalle/l.

Nachteilig an dem Verfahren gemäß EP-PS 0 210 418 ist der hohe Kupfergehalt des Filtrates 2, der die heute gesetzlich erlaubte Grenze für eine Abwassereinleitung von 0,5 mg Cu/l deutlich übersteigt, so daß eine aufwendige Nachreinigung des Filtrates 2 nötig ist. Der wiederverwendbare Anteil von den ausgefällten Metallen ist allein das Kupfer, das in stark verunreinigter Form anfällt, wodurch ein erhöhter Reinigungsaufwand erforderlich wird. Um eine zum Herauslösen des Kupfers genügend starke Salzsäure zu erhalten, werden bei der Hydrolyse pro 1 kg kupferhaltiger Feststoff 1 kg höhersiedende Organochlorsilane eingesetzt. Dieses bedingt beim Herauslösen des Kupfers den Einsatz von technischem Sauerstoff unter Druck in einer Menge von 90 l O₂/1 kg kupferhaltiger Feststoff und Lösezeiten von 3 bis 4 Stunden. Außerdem fallen pro 1 kg kupferhaltiger Feststoff 3 kg feuchter Filterkuchen an, der aus entkupfertem Rückstand, Hydrolyserückstand und Wasser besteht und der deponiert werden muß. Die hohe Einsatzmenge von höhersiedenden Organochlorsilanen zur Bildung von Salzsäure zieht eine entsprechende Mengenverminderung für die Spaltung von Disilanen zu Nutzprodukten nach sich sowie eine hohe zu deponierende Abfallmenge.

Würde man den zur Gewinnung von Salzsäure zu hydrolysierenden Organochlorsilananteil reduzieren, ergibt sich die Situation, daß die Hydrolysesuspension, um gut fließfähig zu sein, einen Feststoffanteil von 20 Gew.-% nicht wesentlich übersteigen sollte, andererseits der HCl-Gehalt der gebildeten Salzsäure von der Menge des eingesetzten Hydrolysewassers abhängt. Bei konstantem Feststoffanteil der Hydrolysesuspension erhält man demnach bei fallendem Anteil an zu hydrolysierenden Organochlorsilanen eine immer HCl-ärmere Salzsäure, die ein Herauslösen des Kupfers aus dem Rückstand schließlich ineffektiv macht.

Der Erfindung liegt die Aufgabe zugrunde, ein Verfahren zur Aufarbeitung von kupferhaltigen Rückständen aus der Organochlorsilansynthese zu entwickeln, das auf wirtschaftliche und umweltschonende Weise durchzuführen ist und sich insbesondere durch eine starke Verringerung des Abwasseranfalls, Reduzierung der zu deponierenden Rückstandsmenge sowie Wiedergewinnung des Kupfers in möglichst reiner Form auszeichnet.

Es wurde nun gefunden, daß sich die Aufarbeitung von kupferhaltigen Rückständen aus der Organochlorsilansynthese auf besonders wirtschaftliche und umweltschonende Weise durchführen läßt, indem man die entkupferte Salzsäure in den Aufarbeitungsprozeß zurückführt.

Gegenstand der vorliegenden Erfindung ist daher ein Verfahren zur Aufarbeitung von kupferhaltigen Rückständen aus der Organochlorsilansynthese durch Hydrolysieren der Rückstände und Behandeln derselben mit Salzsäure in Gegenwart von Sauerstoff sowie Abtrennen der kupferhaltigen Salzsäure von den behandelten Rückständen, das dadurch gekennzeichnet ist, daß die kupferhaltige Salzsäure entkupfert und anschließend zum Hydrolysieren von kupferhaltigen Rückständen und zum Behandeln derselben in Gegenwart von Sauerstoff wieder eingesetzt wird.

Vorzugsweise wird in dem erfindungsgemäßen Verfahren eine Salzsäure benutzt, die bei der Hydrolyse von aus dem Syntheseprozeß stammenden Organochlorsilanen anfällt.

Geeigneterweise werden also die kupferhaltigen Rückstände gemeinsam mit Organochlorsilanen hydrolysiert und mit Salzsäure in Gegenwart von Sauerstoff behandelt.

Es ist zweckmäßig, gemeinsam mit dem kupferhaltigen Rückstand Organochlorsilane in die zurückgeführte Salzsäure einzubringen. Durch das erfindungsgemäße Verfahren kann unabhängig von der Feststoffkonzentration der Hydrolysesuspension ein hoher HCl-Gehalt der Salzsäure eingestellt werden, was das Herauslösen des Kupfers aus dem Rückstand erleichtert. Der HCl-Gehalt der Salzsäure, mit der die kupferhaltigen Rückstände in Gegenwart von Sauerstoff behandelt werden, sollte geeigneterweise mindestens 8 Gew.-% betragen.

Geeigneterweise wird im erfindungsgemäßen Verfahren der kupferhaltige Rückstand teils trocken als Zyklonaustrag sowie teils naß als Naßwäscherückstand zur Hydrolyse geführt. Es ist nämlich eine bevorzugte Variante, die den Wirbelschichtreaktor verlassenden Reaktionsgase nach der Zyklonstufe noch einer Naßwäsche zuzuführen, um die feinsten Feststoffteilchen auszuwaschen. Die Suspension aus dem Naßwäscher kann thermisch auf einen Gehalt von etwa 50 Gew.-% Feststoff eingeengt werden und bildet dann den Naßwäscherückstand. Um möglichst wenig höhersiedende Organochlorsilane mit dem Naßwäscherückstand aus dem Prozeß auszuschleusen, sollte die Zyklonstufe gut trennen, damit wenig Zyklondurchschlag erfolgt und somit wenig Naßwäscherückstand anfällt.

Im erfindungsgemäßen Verfahren brauchen bevorzugt nur 0,05 bis 0,15 kg Organochlorsilane pro 1 kg kupferhaltiger Rückstand zusammen mit dem Rückstand zur Hydrolyse in die zurückgeführte Salzsäure eingebracht zu werden, d. h. es werden also vorzugsweise 0,05 bis 0,15 kg Organochlorsilane pro 1 kg kupferhaltiger Rückstände eingesetzt.

Vorzugsweise wird beim Hydrolysieren der kupferhaltigen Rückstände mit Salzsäure ein Gewichtsverhältnis von Salzsäure zu Rückstand von 2 : 1 bis 20 : 1, besonders vorzugsweise ein Gewichtsverhältnis von Salzsäure zu Rückstand von 5 : 1 bis 10 : 1, eingestellt.

Wie üblich kann die Hydrolyse in schnellaufenden Rührwerken durchgeführt werden.

Mit Hilfe des erfindungsgemäßen Verfahrens läßt sich also die zur Bildung von Salzsäure zu hydrolysierende Organochlorsilanmenge ganz beträchtlich reduzieren, womit auch eine Reduzierung des Hydrolyserückstandes einhergeht. Dieses hat zur Folge, daß auch die zu deponierende Rückstandsmenge wesentlich verringert wird, was einer der Vorteile des erfindungsgemäßen Verfahrens gegenüber denen des Standes der Technik ist.

Beim Behandeln der kupferhaltigen Rückstände mit Salzsäure in Gegenwart von Sauerstoff wird das Kupfer aus den Rückständen herausgelöst.

Das Herauslösen des Kupfers aus den kupferhaltigen Rückständen in der Hydrolysesuspension kann gleichzeitig mit der Hydrolyse oder in einem separaten nachfolgenden Verfahrensschritt erfolgen.

Es kann also das Hydrolysieren der kupferhaltigen Rückstände und das Behandeln derselben mit Salzsäure in Gegenwart von Sauerstoff in zwei getrennten Verfahrensschritten nacheinander erfolgen, oder das Hydrolysieren der kupferhaltigen Rückstände und das Behandeln derselben mit Salzsäure in Gegenwart von Sauerstoff kann in einem Verfahrensschritt erfolgen.

Der zum Herauslösen des Kupfers aus den kupferhaltigen Rückständen notwendige Sauerstoff wird bevorzugt als Luft über Begasungsrührer eingebracht. Bei Temperaturen von 70 bis 80 °C und bei einem Luftangebot von 70 bis 150 Normlitern pro 1 kg kupferhaltigen Rückstand, vorzugsweise von 100 Normlitern Luft bzw. 20 Normlitern O₂ pro 1 kg kupferhaltigen Rückstand beträgt die Lösezeit in der Regel ca. 10 bis 30 Minuten. Die Anwendung von Druck beim Herauslösen des Kupfers verbessert nicht die Wirksamkeit.

Nach dem Behandeln des Rückstandes mit Salzsäure in Gegenwart von Sauerstoff kann der Feststoff von der Suspension mechanisch mit Filter oder Zentrifuge abgetrennt und die abfiltrierte Salzsäure zur Entkupferung geleitet werden. Der Kupfergehalt des entkupferten, feuchten Filterkuchens beträgt < 0,5 Gew.-%. Die Festfeuchte eines abfiltrierten, feuchten Filterkuchens beträgt 22 bzw. 25 bzw. 27 Gew.-% bei einem Einsatzverhältnis von hochsiedenden Organochlorsilanen zu kupferhaltigem Rückstand von 5 bzw. 10 bzw. 15 Gew.-%.

Schleust man aus dem Salzsäurekreislauf nur mit der Restfeuchte des feuchten Filterkuchens Salzsäure aus, ergibt sich die HCl-Konzentration im Salzsäurekreislauf aus dem durch Hydrolyse der hochsiedenden Organochlorsilane zugeführten Chlorwasserstoff und der Restfeuchte des Filterkuchens. Bei einem Anteil von hochsiedenden Organochlorsilanen, bezogen auf den kupferhaltigen Rückstand, von 5 bzw. 10 bzw. 15 Gew.-% erhält man dann einen HCl-Gehalt in der Kreislaufsalzsäure von etwa 9 bzw. 15 bzw. 20 Gew.-%. Der abgetrennte Filterkuchen kann mit NaOH neutral eingestellt und deponiert werden, wobei die Eluatkriterien der TA Abfall unterschritten werden.

Das Kupfer läßt sich aus der kupferhaltigen Salzsäure auf verschiedenste Art und Weise wiedergewinnen. Vorzugsweise wird das Kupfer als reines Metall aus der kupferhaltigen Salzsäure elektrolytisch abgeschieden.

Die abfiltrierte, kupferhaltige Salzsäure kann also einer Elektrolyse zugeführt werden, bei der zweckmäßigerweise Anodenraum und Kathodenraum durch eine Ionenaustauschermembran in bekannter Weise getrennt sind. Diese apparative Anordnung hat u. a. den Vorteil, daß aus Kupferchlorid metallisches Kupfer und Salzsäure entsteht, so daß die bei der Bildung von Kupferchlorid verbrauchte Salzsäure zurückgebildet wird. Das Kupfer kann an der Anode ohne andere metallische Verunreinigungen in einer Reinheit von > 99,9 Gew.-% abgeschieden werden. Die entkupferte Salzsäure wird zum Hydrolysieren der Rückstände und zum Heraus lösen des Kupfers aus denselben in den Aufarbeitungsprozeß zurückgeführt, wobei das mit der filterkuchenfeuchte aus dem Salzsäurekreislauf ausgeschleuste Wasser vor Einsatz in die Hydrolyse ergänzt wird.

Durch die Rückführung der entkupferten Salzsäure in den Aufarbeitungsprozeß fällt im Gegensatz zu den Verfahren gemaß dem Stand der Technik im erfindungsgemäßen Verfahren praktisch kein Abwasser an, wodurch das erfindungsgemäße Verfahren umweltschonend ist.

Das erfindungsgemäße Verfahren kann sowohl diskontinuierlich als auch kontinuierlich durchgeführt werden.

Die Erfindung wird durch das folgende Beispiel näher erläutert:

### Beispiel

In einem 2-l-Autoklaven mit Begasungsrührer werden 800 g zurückgeführte, entkupferte Salzsäure mit einem HCl-Gehalt von 15 Gew.-% vorgelegt. Anschließend werden 90 g Zyklonstaub und 20 g Naßwäscherückstand, der aus einer 50 Gew.-%igen Suspension von in der Zyklonstufe nicht abgeschiedenem Feinstaub in hochsiedenden Organochlorsilanen besteht, in die Salzsäure eingeführt. Der Druck im Autoklaven wird mit Preßluft auf 9 bar gebracht, so daß sich im Gasraum oberhalb der Flüssigkeit 10 Nl Luft befinden. Bei einer Temperatur von 75 °C wird der Rückstand für 20 Minuten mit Salzsäure in Gegenwart von Sauerstoff behandelt. Der Gasraum wird über eine Kühlfalle entspannt und das anfallende Kondensat zurückgeführt. Anschließend wird die vorliegende Suspension abgenutscht. Dabei fallen 130 g feuchter Filterkuchen mit einem Kupfergehalt von 0,3 Gew.-% an. Die abfiltrierte Salzsäure hat einen Kupfergehalt von 1,1 Gew.-% und einen Zinkgehalt von 0,35 Gew.-%. In einer Elektrolysezelle mit Diaphragma, Kupferkathode und gecoateter Titananode wird diese Salzsäure bei 2,1 Volt und einer Stromdichte von 200 A/m² elektrolysiert. Das abgeschiedene Kupfer hat eine Reinheit von > 99,9 Gew.-% sowie einen Gehalt an Zn von kleiner als 10 mg/kg und einen Gehalt an Si von kleiner als 20 mg/kg. Nach der Elektrolyse enthält die Salzsäure 0,1 Gew.-% Cu und 0,35 Gew.-% Zn. Nach Zufügen von 26 g Wasser wird diese Salzsäure wiederum zum Hydrolysieren von neuem kupferhaltigen Rückstand sowie zum Herauslösen des Kupfers aus demselben eingesetzt.

## Patentansprüche

1. Verfahren zur Aufarbeitung von kupferhaltigen Rückständen aus der Organochlorsilansynthese durch Hydrolysieren der Rückstände und Behandeln derselben mit Salzsäure in Gegenwart von Sauerstoff sowie Abtrennen der kupferhaltigen Salzsäure von den behandelten Rückständen,
dadurch gekennzeichnet,
daß die kupferhaltige Salzsäure entkupfert und anschließend zum Hydrolysieren von kupferhaltigen Rückständen und zum Behandeln derselben in Gegenwart von Sauerstoff wieder eingesetzt wird.

2. Verfahren nach Anspruch 1,
dadurch gekennzeichnet,
daß das Hydrolysieren der kupferhaltigen Rückstände und das Behandeln derselben mit Salzsäure in Gegenwart von Sauerstoff in einem Verfahrensschritt erfolgt.

3. Verfahren nach den Ansprüchen 1 und 2,
dadurch gekennzeichnet,
daß eine Salzsäure benutzt wird, die bei der Hydrolyse von aus dem Syntheseprozeß stammenden Organochlorsilanen anfällt.

4. Verfahren nach den Ansprüchen 1 bis 3,
dadurch gekennzeichnet,
daß die kupferhaltigen Rückstände gemeinsam mit Organochlorsilanen hydrolysiert und mit Salzsäure in Gegenwart von Sauerstoff behandelt werden.

5. Verfahren nach Anspruch 4,
dadurch gekennzeichnet,
daß 0,05 bis 0,15 kg Organochlorsilane pro 1 kg kupferhaltiger Rückstände eingesetzt werden.

6. Verfahren nach den Ansprüchen 1 bis 5,
dadurch gekennzeichnet,
daß beim Hydrolysieren der kupferhaltigen Rückstände mit Salzsäure ein Gewichtsverhältnis von Salzsäure zu Rückstand von 2 : 1 bis 20 : 1 eingestellt wird.

7. Verfahren nach Anspruch 6,
dadurch gekennzeichnet,
daß beim Hydrolysieren der kupferhaltigen Rückstände mit Salzsäure ein Gewichtsverhältnis von Salzsäure zu Rückstand von 5 : 1 bis 10 : 1 eingestellt wird.

8. Verfahren nach den Ansprüchen 1 bis 7,
dadurch gekennzeichnet,
daß das Kupfer aus der kupferhaltigen Salzsäure elektrolytisch abgeschieden wird.
